# EUROPÄISCHE PATENTSCHRIFT

(11) **EP 1 378 410 B1**
(45) Veröffentlichungstag und Bekanntmachung des Hinweises auf die Patenterteilung: **08.03.2006**
(21) Anmeldenummer: 03014011.5
(22) Anmeldetag: 21.06.2003
(51) Int. Cl.: B60T 7/10

(54) **Betätigungsvorrichtung für eine Feststellbremse**
Parking brake actuator
Actionneur d'un frein de stationnement

(30) Priorität: 06.07.2002 DE 20210489 U
(43) Veröffentlichungstag der Anmeldung: 07.01.2004
(73) Patentinhaber: Dietz-automotive GmbH & Co. KG, 73265 Dettingen unter Teck (DE)
(72) Erfinder: Bauer, Hans, 73265 Dettingen/Teck (DE)
(74) Vertreter: Ruckh, Rainer Gerhard

(56) Entgegenhaltungen:
- DE-A- 19 521 159
- DE-A- 19 936 733
- GB-A- 2 221 015

## Beschreibung

Die Erfindung betrifft eine Betätigungsvorrichtung für eine Feststellbremse gemäß dem Oberbegriff des Anspruchs 1.

Eine derartige Betätigungsvorrichtung ist aus der DE 195 21 159 C2 bekannt. Diese Betätigungsvorrichtung umfasst einen Handbremshebel, der an einem Lagerbock schwenkbar gelagert ist. Zur Betätigung der Feststellbremse ist eine Betätigungsstange vorgesehen, die in Eingriff mit einer Festsetzeinrichtung steht. Die Betätigungsstange verläuft in einer rohrförmigen Aufnahme des Handbremshebels. Am vorderen Ende der Betätigungsstange ist ein Druckknopf vorgesehen, der über die rohrförmige Aufnahme hervorsteht und von einer Bedienperson betätigbar ist.

Die Festsetzeinrichtung besteht aus einem Sperrsegment und einer Sperrklinke. Das Sperrsegment ist am Lagerbock befestigt und weist eine Leiste mit Rastzähnen auf. Die Sperrklinke ist an einem Lagerzapfen des Handbremshebels schwenkbar gelagert und über ein Federelement vorgespannt. Dabei ist die Sperrklinke so am Lagerzapfen gelagert, dass diese in zwei beidseits des Lagerzapfens verlaufende Schwenkarme unterteilt ist. An einem Ende eines ersten Schwenkarmes sind Rastnasen vorgesehen, die zur Fixierung der Sperrklinke am Sperrsegment in die Rastzähne des Sperrsegments greifen. Das Ende des zweiten Schwenkarmes ist über eine Gelenkverbindung am unteren Ende der Betätigungsstange befestigt.

Zur Betätigung der Feststellbremse wird der Handbremshebel geschwenkt. Die Schwenkbewegung wird über die Betätigungsstange auf die Sperrklinke übertragen. In einer Endposition rastet die Sperrklinke an dem Sperrsegment ein und fixiert den Handbremshebel in der entsprechenden Position.

Zur Lösung des Handbremshebels aus dieser Position wird der Druckknopf betätigt, wodurch die Sperrklinke vom Sperrsegment gelöst wird. Somit kann der Handbremshebel wieder in seine Ausgangsposition gebracht werden.

Nachteilig bei derartigen Betätigungsvorrichtungen ist, dass während der Schwenkbewegung des Handbremshebels unerwünschte Geräuschentwicklungen auftreten. Diese Geräusche werden dadurch verursacht, dass bei Schwenken des Handbremshebels die Sperrklinke mit ihren Rastnasen entlang der Leiste mit den Rastzähnen am Sperrsegment bewegt wird.

Aus der GB-A2 221 015 ist eine gattungsgemäße Betätigungsvorrichtung für eine Feststellbremse bekannt. Diese Betätigungsvorrichtung weist eine an einem Handbremshebel gelenkig gelagerte Sperrklinke auf, deren Rastnase mit einem Sperrsegment an einem Lagerbock in Eingriff gebracht werden kann, um den Handbremshebel in einer vorgegebenen Schwenkstellung am Lagerbock zu fixieren. Weiterhin ist ein Friktionselement vorgesehen, welches sowohl mit dem Sperrsegment als auch mit der Sperrklinke gelenkig verbunden ist. Bei Schwenken des Handbremshebels übt die Sperrklinke eine Kraft auf das Friktionselement aus. Das Friktionselement weist einen Reibungskörper auf, der bei Ausübung dieser Kraft gegen das Sperrsegment drückt. Dadurch wird auf die Sperrklinke eine Gegenkraft ausgeübt, wodurch die Sperrklinke außer Eingriff mit dem Sperrsegment gebracht wird, so das bei Schwenken des Handbremshebels die Sperrklinke nicht mehr im Sperrsegment geführt ist, wodurch unerwünschte Geräuschentwicklungen bei Schwenken des Handbremshebels vermieden werden.

Nachteilig hierbei ist dass ein relativ hoher konstruktiver Aufwand notwendig ist, um Geräuschentwicklungen bei Schwenken des Handbremshebels zu vermeiden.

Der Erfindung liegt die Aufgabe zugrunde, eine Betätigungsvorrichtung der eingangs genannten Art so auszubilden, dass mit möglichst geringem Aufwand unerwünschte Geräuschentwicklungen während der Schwenkbewegung des Handbremshebels gering gehalten werden.

Zur Lösung dieser Aufgabe sind die Merkmale des Anspruchs 1 vorgesehen. Vorteilhafte Ausführungsfbrmen und zweckmäßige Weiterbildungen der Erfindung sind in den Unteransprüchen beschrieben.

Die erfindungsgemäße Betätigungsvorrichtung für eine Feststellbremse umfasst einen an einem Lagerbock schwenkbar gelagerten Handbremshebel, eine Festsetzeinrichtung, welche ein am Lagerbock fixiertes Sperrsegment und eine beweglich gelagerte Sperrklinke aufweist, und eine im Handbremshebel geführte und mit der Sperrklinke gekoppelte Betätigungsstange. Am Handbremshebel it ein Anschlag mit einem elastischen Dämpfungselement vorgesehen ist, mittels dessen bei Schwenken des Handbremshebels die Sperrklinke bei Führung in Rastzähnen des Sperrsegments abgebremst ist.

Durch das Abbremsen der Bewegung der Sperrklinke wird auf überraschend einfache Weise eine erhebliche Geräuschminderung bei dem Schwenkvorgang des Handbremshebels erzielt.

Die Abbremsung der Sperrklinke erfolgt dabei ohne konstruktiven Eingriff in die Festsetzeinrichtung. Insbesondere kann die Kopplung der Sperrklinke an das Sperrsegment derart unverändert bleiben, dass die Sperrklinke nach wie vor über an dem Sperrsegment vorgesehene Rastzähne geführt wird. Wesentlich für die Geräuschminderung ist lediglich eine Dämpfung der Bewegung der Sperrklinke in Richtung des Sperrsegments.

Dies wird durch eine geeignete Vorgabe des Dämpfungsweges des gegen den Anschlag geführten Dämpfungselements erzielt.

Das Dämpfungselement besteht aus einem verschleißfreien, elastischen Material. Besonders vorteilhaft besteht das Dämpfungselement aus Silikon.

Zur Vorgabe des Dämpfungsweges ist das Dämpfungselement relativ zum Anschlag zweckmäßigerweise derart angeordnet, dass ein Segment des Dämpfungselements eine Aufwölbung an einer Anschlagfläche des Anschlags bildet, so dass zwischen der Anschlagfläche und dem Segment des Dämpfungselements ein Zwischenraum entsteht.

Bei Druckbeaufschlagung durch das Sperrsegment wird dann das Segment des Dämpfungselements gegen die Anschlagfläche gedrückt, bis das Segment dicht an dieser Anschlagfläche anliegt.

Mit dieser Anordnung wird die Sperrklinke äußerst effizient abgebremst. Zudem ist vorteilhaft, dass die Sperrklinke nur Druckkräfte und keine Scherkräfte auf das Dämpfungselement ausübt. Dadurch treten nahezu keine Reibungskräfte zwischen dem Dämpfungselement und der Sperrklinke auf, wodurch der Verschleiß des Dämpfungselements äußerst gering gehalten ist.

In einer vorteilhaften Ausführungsform besteht der Anschlag aus einem Formteil mit einer als Ausnehmung gebildeten Aufnahme, in welche ein Segment des Dämpfungselements einsteckbar ist. Das Dämpfungselement ist dabei vorzugsweise von einem Schlauchstück gebildet.

Die so ausgebildete Anordnung des Anschlags und des Dämpfungselements kann kostengünstig hergestellt und auf einfache Weise schnell montiert werden.

Weiterhin kann diese Anordnung auf einfache Weise an die Konstruktion der jeweiligen Festsetzeinrichtung angepasst werden. Insbesondere ist die Länge des Dämpfwgsweges an die Höhen der Rastzähne des Sperrsegments angepasst. Dabei hat es sich als vorteilhaft erwiesen, den Dämpfungsweg geringfügig größer als die Höhen der Rastzähne zu wählen.

Die erfindungsgemäße Betätigungsvorrichtung ist ohne weiteres auch in weiteren Systemen von Kraftfahrzeugen einsetzbar, wobei generell mit einer Sperrklinke oder dergleichen sowie einem zugeordneten Sperrsegment Verriegelungs- und Entriegelungsvorgänge durchführbar sind. Derartige Systeme sind besonders vorteilhaft von Verstellmechanismen von Sitzen von Kraftfahrzeugen oder auch von Motorhaubenentriegelungen, Heckklappenentriegelungen oder Tankdeckelverriegelungsmechanismen in Kraftfahrzeugen gebildet.

Die Erfindung wird im Nachstehenden anhand der Zeichnungen erläutert. Es zeigen:
- Figur 1:: Ausführungsbeispiel der erfindungsgemäßen Betätigungsvorrichtung für eine Feststellbremse mit einer eine Sperrklinke und ein Sperrsegment aufweisenden Festsetzeinrichtung sowie einem der Sperrklinke zugeordneten Anschlag mit einem Dämpfungselement.
- Figur 2:: Teildarstellung einer Betätigungsvorrichtung gemäß Figur 1 mit in Abstand zum Anschlag liegender Sperrklinke.
- Figur 3:: Anordnung gemäß Figur 2 mit gegen den Anschlag gedrücktem Dämpfungselement.
- Figur 4:: Weiteres Ausführungsbeispiel eines Anschlags mit einem Dämpfungselement für die Betätigungsvorrichtung gemäß Figur 1 oder gemäß den Figuren 2 und 3.

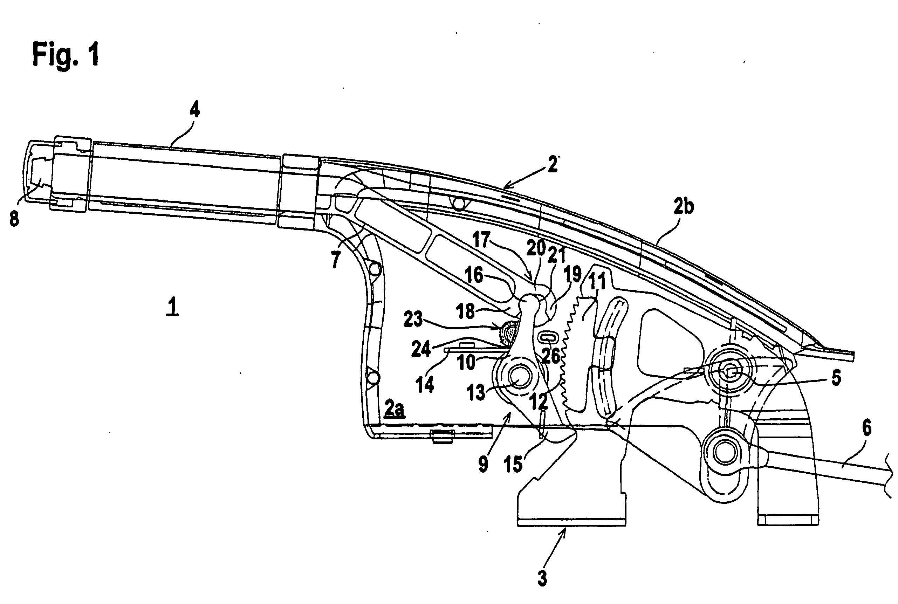

Figur 1 zeigt ein Ausführungsbeispiel der erfindungsgemäßen Betätigungsvorrichtung 1 für eine Feststellbremse in einem Fahrzeug.

Die Betätigungsvorrichtung 1 weist einen Handbremshebel 2 auf, welcher schwenkbar an einem Lagerbock 3 gelagert ist. Der Handbremshebel 2 besteht im vorliegenden Fall aus zwei Hebelschalen (2a), welche mittels einer Abdeckblende (2b) fixierbar sind. Figur 1 zeigt eine offenliegende Hebelschale (2a), auf deren Oberseite die Abdeckblende (2b) aufsitzt.

Der Handbremshebel 2 weist einen Grundkörper auf, an dessen Vorderende eine rohrförmige Führung 4 anschließt. Im Bereich des Grundkörpers ist der Handbremshebel 2 mittels eines Lagerzapfens 5 um eine horizontal verlaufende Schwenkachse gelagert.

Zudem ist am Lagerbock 3 eine Zugstange 6 gelagert, die mit dem Handbremshebel 2 gekoppelt ist. Die jeweilige Stellung des Handbremshebels 2 wird über diese Zugstange 6 auf die nicht dargestellte Feststellbremse des Fahrzeugs übertragen.

In der rohrförmigen Führung 4 ist der vordere Teil einer Betätigungsstange 7 gelagert. Die Betätigungsstange 7 ist vorzugsweise einstückig ausgebildet und besteht beispielsweise aus einem Kunststoffspritzteil. An das Vorderende der Betätigungsstange 7 schließt ein Druckknopf 8 an, der über eine Öffnung am Vorderende der rohrförmigen Führung 4 hervorsteht und so von einer Bedienperson betätigt werden kann.

Der Druckknopf 8 ist starr mit der Betätigungsstange 7 verbunden oder einstückig mit dieser ausgebildet. Die Betätigungsstange 7 weist zwei in stumpfem Winkel, jeweils längs einer Geraden verlaufende Stangensegmente auf, wobei das erste Stangensegment in der rohrförmigen Führung 4 verläuft und das zweite Stangensegment im Bereich des Grundkörpers des Handbremshebels 2 verläuft.

Dieses Stangensegment der Betätigungsstange 7 ist mit einer Festsetzeinrichtung 9 gekoppelt. Mit dieser Festsetzeinrichtung 9 kann der Handbremshebel 2 in einer vorgegebenen Schwenkstellung fixiert werden.

Die Festsetzeinrichtung 9 weist eine Sperrklinke 10 und ein Sperrsegment 11 auf. Das Sperrsegment 11 ist am Lagerbock 3 befestigt und weist eine Leiste mit Rastzähnen 12 auf. Die Leiste verläuft längs eines Kreisbogens. Längs der Leiste sind die jeweils identisch ausgebildeten Rastzähne 12 hintereinander angeordnet.

Die Sperrklinke 10 ist an einem Lagerzapfen 13 des Handbremshebels 2 um eine horizontal verlaufende Schwenkachse schwenkbar gelagert und über ein Federelement 14 vorgespannt.

Die Schwenkachse läuft durch das Zentrum der Sperrklinke 10 und unterteilt diese in zwei beidseits zur Schwenkachse verlaufende Schwenkarme. Der erste Schwenkarm der Sperrklinke 10 ist an die Betätigungsstange 7 gekoppelt. Der zweite Schwenkarm der Sperrklinke 10 steht in Eingriff mit dem Sperrsegment 11. Hierzu weist die Sperrklinke 10 am vorderen Ende des zweiten Schwenkarmes eine Rastnase 15 auf, die an den Rastzähnen 12 des Sperrsegments 11 eingerastet werden kann.

Bei dem Ausführungsbeispiel gemäß Figur 1 weist die Sperrklinke 10 am oberen Ende des ersten Schwenkarmes ein Kopplungssegment 16 auf, welches in einer Aufnahme 17 der Betätigungsstange 7 mit vorgegebenem Spiel gelagert ist.

Das Kopplungssegment 16 weist im wesentlichen die Form eines Kreisscheibensegments auf und bildet eine Querschnittsverbreiterung am vorderen Ende des ersten Schwenkarmes der Sperrklinke 10.

Die Aufnahme 17 befindet sich am unteren Ende der Betätigungsstange 7. Dabei ist die Aufnahme 17 von einer Ausnehmung gebildet, die von zwei Seitenwänden 18, 19 begrenzt ist. Die Seitenwände 18, 19 sind über ein Wandelement 20 an ihrer Oberseite verbunden. Die unteren Ränder der Seitenwände 18, 19 münden an einer Öffnung aus, in welche das Kopplungssegment 16 der Sperrklinke 10 greift.

Die Innenseiten der Seitenwände 18, 19 liegen in Abstand einander gegenüber, so dass das Kopplungssegment 16 mit vorgegebenem Spiel zwischen den Seitenwänden 18, 19 gelagert ist.

Die Konturen der Innenseiten der Seitenwände 18, 19 sind jeweils an die Kontur des Kopplungssegments 16 der Sperrklinke 10 angepasst, so dass das Kopplungssegment 16 in den jeweiligen Grenzlagen mit einem Abschnitt der Mantelfläche formschlüssig an der jeweiligen Innenseite der Seitenwand 18, 19 anliegt.

Der Abstand der so ausgebildeten Seitenwände 18, 19 verjüngt sich damit zur Öffnung am unteren Rand hin.

Das die Seitenwände 18, 19 verbindende Wandelement 20 schließt an diese kontinuierlich an, so dass das Kopplungssegment 16 mit dem oberen Teil der Mantelfläche an dem Wandelement 20 anliegt.

Die Ausnehmung ist an der Hinterseite von einer Wand 21 begrenzt. Bei Aufsetzen der Sperrklinke 10 auf den Lagerzapfen 13 wird das Kopplungssegment 16 in die Ausnehmung eingelegt, bis dieses auf der Wand 21 aufliegt.

Das so ausgebildete Kopplungssegment 16 der Sperrklinke 10 ist in der Aufnahme 17 an der Betätigungsstange 7 somit derart gelagert, dass sich das Kopplungssegment 16 auch bei Schwenken der Sperrklinke 10 nicht aus der Aufnahme 17 löst.

Weiterhin ist das Kopplungssegment 16 in der Aufnahme 17 derart gelagert, dass die Sperrklinke 10 in einer Raststellung oder Ruhestellung am Sperrsegment 11 fixiert und gegen ein ungewolltes Ablösen vom Sperrsegment 11 gesichert ist.

Bei Schwenken des Handbremshebels 2 wird die Rastnase 15 der Sperrklinke 10 über die Rastzähne 12 des Sperrsegments 11 geführt, wodurch die Sperrklinke 10 eine oszillierende Bewegung ausführt. Die Aufnahme 17 an der Betätigungsstange 7 ist so dimensioniert, dass diese die entsprechende oszillierende Bewegung des Kopplungssegments 16 vollständig aufgenommen wird, in dem sich das Kopplungssegment 16 frei zwischen den Seitenwänden bewegt. Dadurch wird erreicht, dass die oszillierende Bewegung der Sperrklinke 10 nicht auf die Betätigungsstange 7 übertragen wird, so dass der Druckknopf 8 während der Schwenkbewegung in seiner Ruhestellung verbleibt.

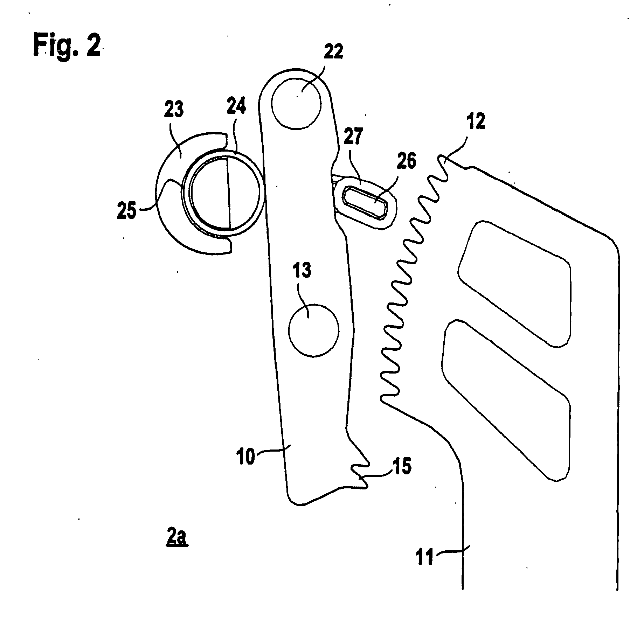

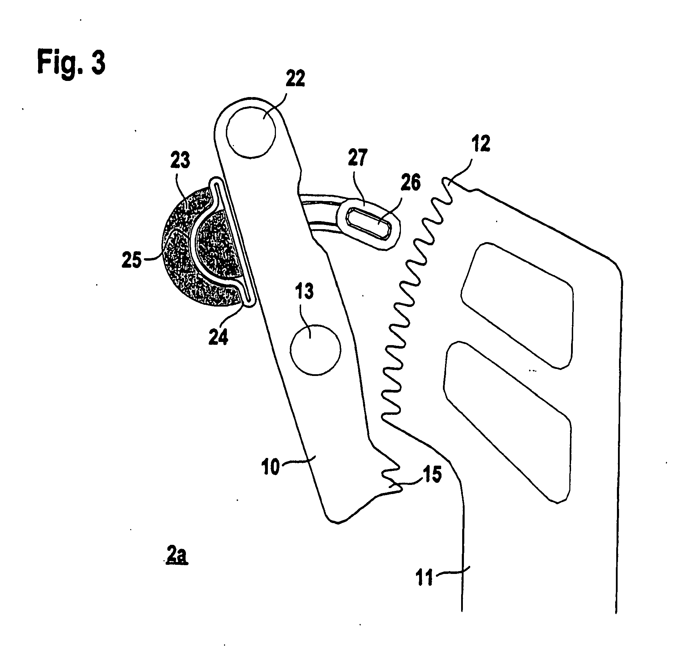

Die Figuren 2 und 3 zeigen jeweils einen Ausschnitt einer Betätigungsvorrichtung 1, deren Aufbau im Wesentlichen dem Ausführungsbeispiel gemäß Figur 1 entspricht. Im Unterschied zum Ausführungsbeispiel gemäß Figur 1 ist bei der Betätigungsvorrichtung,1 eine Sperrklinke 10 vorgesehen, die gelenkig mit der nicht gesondert dargestellten Betätigungsstange 7 verbunden ist. Hierzu ist am oberen Ende der Sperrklinke 10 eine Bohrung 22 vorgesehen, in welche eine nicht dargestellte Gelenkverbindung zur Ankopplung an die Betätigungsstange 7 einführbar ist.

Bei Schwenken des Handbremshebels 2 wird sowohl bei der Ausführungsform gemäß Figur 1 als auch bei der Ausführungsform gemäß den Figuren 2 und 3 die Rastnase 15 der Sperrklinke 10 über die Rastzähne 12 des Sperrsegments 11 geführt. Die dabei verursachte Geräuschentwicklung wird erfindungsgemäß dadurch reduziert, dass die Sperrklinke 10 abgebremst wird, wodurch deren Rastnase 15 entsprechend langsam in die Rastzähne 12 des Sperrsegments 11 eingeführt wird.

Hierzu ist ein Anschlag 23 mit einem Dämpfungselement 24 vorgesehen. Der Anschlag 23 ist von einem Formteil gebildet, der von der Innenwand der Hebelschale 2a des Handbremshebels 2 hervorsteht und vorzugsweise einstückig mit diesem ausgebildet ist.

Das Formteil weist im Wesentlichen die Form eines Zylindersegments mit einem halbkreisförmigen Querschnitt auf. Die ebene Seitenwand eines Zylindersegments bildet eine Anschlagfläche, gegen welche die Sperrklinke 10 geführt ist. Generell ist die Anschlagfläche an die Kontur der Sperrklinke 10 angepasst, so dass die Sperrklinke 10 über die gesamte Breite der Anschlagfläche an den Anschlag 23 anlegbar ist.

Das Dämpfungselement 24 besteht aus einem elastischen Material. Prinzipiell können hierfür Materialien wie Moosgummi, Gummi und dergleichen verwendet werden. In einer besonders vorteilhaften Ausführungsform besteht das Dämpfungselement 24 aus Silikon.

Im vorliegenden Fall ist das Dämpfungselement 24 von einem hohlzylindrischen Schlauchstück gebildet. Das so ausgebildete Dämpfungselement 24 ist am Anschlag 23 befestigt. Hierzu weist der Anschlag 23 eine Aufnahme auf. Diese ist als Aussparung 25 in dem Formteil ausgebildet.

Die Aussparung 25 verläuft entlang eines Kreisbogens im Formteil, wobei der Radius des Kreisbogens dem Krümmungsradius des schlauchförmigen Dämpfungselements 24 entspricht. Die Aussparung 25 verläuft parallel zum kreisförmig ausgebildeten Abschnitt der Randkontur des Formteils und mündet jeweils an den seitlichen Rändern der Anschlagfläche aus. Die Form und der Querschnitt der Aussparung 25 sind über die gesamte Höhe des Formteils konstant. Dabei mündet die Aussparung 25 an der ebenen Oberseite des Formteils auf.

Somit kann das schlauchförmige Dämpfungselement 24 zur Fixierung am Anschlag 23 über die Oberseite des Formteils in die Aussparung 25 eingesteckt werden.

Das Dämpfungselement 24 liegt mit einem Segment, das sich im vorliegenden Fall über einen Winkelbereich von 180° der Mantelfläche erstreckt, formschlüssig in der Aussparung 25 und ist so gegen Herauslösen aus dem Anschlag 23 gesichert. Die Höhe des Formteils entspricht im Wesentlichen der Höhe des schlauchförmigen Dämpfungselements 24, so das dieses nicht über die Oberseite des Formteils hervorsteht. Der an den seitlichen Rändern der Anschlagfläche ausmündende Teil des schlauchförmigen Dämpfungselements 24 bildet ein kreisbogenförmiges Segment, welches sich, wie aus Figur 2 ersichtlich, bogenförmig von der Anschlagfläche abhebt.

Bei Andrücken der Sperrklinke 10 gegen dieses Segment des Dämpfungselements 24 wird dieses zusammengedrückt bis es schließlich, wie in Figur 3 dargestellt, flachgepresst auf der Anschlagfläche des Anschlags 23 aufliegt.

Die Höhe des Bogens, der von dem über die Anschlagfläche hervorstehenden Segment des Dämpfungselements 24 gebildet ist, definiert somit einen Dämpfungsweg, entlang dessen die Sperrklinke 10 durch Eindrücken des Dämpfungselements 24 gegen die Anschlagfläche abgebremst wird.

Generell sind auch andere Anordnungen und Geometrien des Dämpfungselements 24 möglich, wobei das Dämpfungselement 24 so angeordnet ist, dass zwischen diesem und der Anschlagfläche ein Zwischenraum verbleibt.

Prinzipiell kann auch auf die Anschlagfläche direkt ein Dämpfungselement 24 aufgebracht werden. Der Dämpfungsweg ist dann allein durch die Kompression des Dämpfungselements 24 gegeben. Zur Erzielung hinreichend großer Dämpfungswege muss dann jedoch das Dämpfungselement 24 eine große Schichtdicke aufweisen und zudem leicht verformbar sein. Derartige Materialanforderungen lassen sich prinzipiell mit Moosgummischichten oder dergleichen erfüllen. Jedoch besteht bei derartigen Dämpfungselementen 24 ein wesentliches Problem darin, dass an die Materialien hohe Anforderungen hinsichtlich ihrer elastischen Verformbarkeit und ihrer Verschleißanfälligkeit zu stellen sind, die nur unzureichend erfüllbar sind.

Wie aus den Figuren 1 - 3 ersichtlich, ist der Anschlag 23 mit dem Dämpfungselement 24 auf der dem Sperrsegment 11 abgewandten Seite der Sperrklinke 10 angeordnet. Dabei ist der Anschlag 23 mit dem Dämpfungselement 24 im Bereich des ersten Schwenkarmes der Sperrklinke 10 angeordnet, welche an die Betätigungsstange 7 gekoppelt ist.

Durch diese Anordnung wird erreicht, dass die Sperrklinke 10 gerade dann gegen das Dämpfungselement 24 gedrückt wird, wenn die Rastnase 15 der Sperrklinke 10 gegen die Rastzähne 12 des Sperrsegments 11 geführt wird. Damit wird die Rastnase 15 gebremst gegen die Rastzähne 12 geführt, wodurch eine erhebliche Geräuschminderung bei Schwenken des Handbremshebels 2 erzielt wird.

Besonders vorteilhaft ist die Länge des Dämpfungsweges an die Höhen der Rastzähne 12 des Sperrsegments 11 angepasst. Es hat sich als zweckmäßig erwiesen, den Dämpfungsweg geringfügig größer als die Höhen der Rastzähne 12 zu wählen. Dadurch ist gewährleistet, dass über das Dämpfungselement 24 fortdauernd eine Bremswirkung erzielt wird, solange die Sperrklinke 10 im Eingriff mit dem Sperrsegment 11 steht.

Zur Begrenzung der Bewegung der Sperrklinke 10 ist zusätzlich ein Endanschlag 26 vorgesehen. Der Endanschlag 26 besteht wie der Anschlag 23 aus einem Formteil, der an die Halbschale des Handbremshebels 2 angeformt ist. Im vorliegenden Fall ist auf das Formteil eine geräuschdämpfende Schicht 27 aufgebracht.

Der Endanschlag 26 liegt auf der dem Sperrsegment 11 zugewandten Seite der Sperrklinke 10, so dass der Anschlag 23 mit dem Dämpfungselement 24 und der Endanschlag 26 beidseits der Sperrklinke 10 gegenüberliegend angeordnet sind.

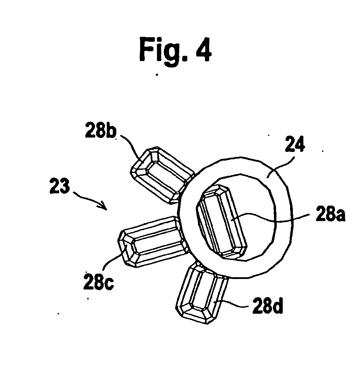

Figur 4 zeigt ein weiteres Ausführungsbeispiel eines Anschlags 23 mit einem Dämpfungselement 24 für eine Betätigungsvorrichtung gemäß Figur 1 oder gemäß den Figuren 2 und 3. Der Anschlag besteht in diesem Fall aus vier diskreten Teilstücken 28a - d, die jeweils als Formteile ausgebildet sind und an die Hebelschale 2a des Handbremshebels 2 angeformt sind. Die Teilstücke 28a - d stehen senkrecht von der Innenwand der Hebelschale 2a hervor und weisen jeweils einen im Wesentlichen rechteckigen Querschnitt auf. Die Höhen der Teilstücke 28a - d sind jeweils gleich groß und an die Bauhöhe des Dämpfungselements 24 angepasst.

Die Frontseite des vorderen, dem Sperrsegment zugewandten Teilstücks 18a bildet die Anschlagfläche, gegen welche ein Segment des Dämpfungselements 24 andrückbar ist. Die restlichen Teilstücke 28b - d sind radial zum Zentrum des Anschlags 23 angeordnet. Die schmalseitigen Enden der Teilstücke 28a - d sind dabei in Richtung des ersten Teilstücks 28a so ausgerichtet, dass zwischen diesen und dem zweiten Teilstück 28b ein Zwischenraum gebildet wird, der als Aufnahme für das Dämpfungselement 24 dient.

Das Dämpfungselement 24 besteht analog zu den Ausführungsbeispielen gemäß den Figuren 1 - 3 aus Silikon und ist als hohlzylindrisches Schlauchstück ausgebildet.

Der Zwischenraum zwischen dem ersten Teilstück 28a und den weiteren Teilstücken 28b - d des Teilstücks ist an die Form des Dämpfungselements 24 angepasst, so dass ein Segment des hohlzylindrischen Schlauchstücks in den Zwischenraum einsteckbar ist und dort durch Kontakt mit den Teilstücken 28a - d fixiert wird.

In dieser Einbauposition steht analog zu den Ausführungsbeispielen gemäß den Figuren 1 - 3 ein Segment des Dämpfungselements 24 bogenförmig über die Anschlagfläche des Anschlags 23 hervor, wobei diese Anschlagfläche von der Frontseite des ersten Teilstückes 28a gebildet ist. Bei Druckbeaufschlagung durch die Sperrklinke 10 wird das Segment des Dämpfungselements 24 gegen diese Anschlagfläche gepresst.

### Bezugszeichenliste

- (1): Betätigungsvorrichtung
- (2): Handbremshebel
- (2a): Hebelschale
- (2b): Abdeckblende
- (3): Lagerbock
- (4): Führung
- (5): Lagerzapfen
- (6): Zugstange
- (7): Betätigungsstange
- (8): Druckknopf
- (9): Festsetzeinrichtung
- (10): Sperrklinke
- (11): Sperrsegment
- (12): Rastzähne
- (13): Lagerzapfen
- (14): Federelement
- (15): Rastnase
- (16): Kopplungssegment
- (17): Aufnahme
- (18): Seitenwand
- (19): Seitenwand
- (20): Wandelement
- (21): Wand
- (22): Bohrung
- (23): Anschlag
- (24): Dämpfungselement
- (25): Aussparung
- (26): Endanschlag
- (27): Beschichtung
- (28 a - d): Teilstücke

## Patentansprüche

1. Betätigungsvorrichtung für eine Feststellbremse mit einem an einem Lagerbock (3) schwenkbar gelagerten Handbremshebel (2), mit einer Festsetzeinrichtung (9), welche ein am Lagerbock (3) fixiertes Sperrsegment (11) und eine beweglich gelagerte Sperrklinke (10) aufweist, und mit einer im Handbremshebel (2) geführten und mit der Sperrklinke (10) gekoppelten Betätigungsstange (7), **dadurch gekennzeichnet, dass** am Handbremshebel (2) ein Anschlag (23) mit einem elastischen Dämpfungselement (24) vorgesehen ist, mittels dessen bei Schwenken des Handbremshebels (2) die Sperrklinke (10) bei Führung in Rastzähnen (12) des Sperrsegments (11) abgebremst ist.

2. Betätigungsvorrichtung nach Anspruch 1, **dadurch gekennzeichnet, dass** ein Segment des am Anschlag (23) fixierten Dämpfungselements (24) von einer Anschlagfläche des Anschlags (23) hervorsteht, wobei dieses Segment bei Druckbeaufschlagung durch die Sperrklinke (10) gegen die Anschlagfläche gedrückt ist.

3. Betätigungsvorrichtung nach Anspruch 2, **dadurch gekennzeichnet, dass** der Dämpfungsweg vom Abstand des Segmentes des Dämpfungselements (24) zur Anschlagfläche gebildet ist.

4. Betätigungsvorrichtung nach Anspruch 3, **dadurch gekennzeichnet, dass** die Länge des Dämpfungsweges an die Höhen der an dem Sperrsegment (11) vorgesehenen Rastzähnen (12) angepasst ist.

5. Betätigungsvorrichtung nach einem der Ansprüche 1 - 4, **dadurch gekennzeichnet, dass** das Dämpfungselement (24) von einem hohlzylindrischen Schlauchstück gebildet ist.

6. Betätigungsvorrichtung nach Anspruch 5, **dadurch gekennzeichnet, dass** das Dämpfungselement (24) aus Silikon besteht.

7. Betätigungsvorrichtung nach einem der Ansprüche 1 bis 6, **dadurch gekennzeichnet, dass** der Anschlag (23) von wenigstens einem Formteil gebildet ist, welches eine Aufnahme aufweist, in welcher ein Segment des Dämpfungselements (24) gelagert ist.

8. Betätigungsvorrichtung nach Anspruch 7, **dadurch gekennzeichnet, dass** das über die Anschlagfläche hervorstehende Segment und das im Formteil gelagerte Segment des Dämpfungselements (24) jeweils von einem sich über 180° erstreckenden Teilstück des Mantels des hohlzylindrischen Schlauchstückes gebildet ist.

9. Betätigungsvorrichtung nach einem der Ansprüche 7 oder 8, **dadurch gekennzeichnet, dass** die Aufnahme (17) des Formteils von einer Aussparung (25) gebildet ist, in welche das Segment des Dämpfungselements (24) einsteckbar ist.

10. Betätigungsvorrichtung nach Anspruch 9, **dadurch gekennzeichnet, dass** die Aussparung (25) entlang eines Kreisbogens verläuft und an den seitlichen Rändern der Anschlagfläche ausmündet.

11. Betätigungsvorrichtung nach einem der Ansprüche 1 - 10, **dadurch gekennzeichnet, dass** der Anschlag (23) mit dem Dämpfungselement (24) auf der dem Sperrsegment (11) abgewandten Seite der Sperrklinke (10) angeordnet ist.

12. Betätigungsvorrichtung nach Anspruch 11, **dadurch gekennzeichnet, dass** die Sperrklinke (10) am Handbremshebel (2) um eine Schwenkachse schwenkbar gelagert ist, so dass die Sperrklinke (10) in zwei beidseits der Schwenkachse verlaufende Schwenkarme unterteilt ist, wobei der erste, an die Betätigungsstange (7) gekoppelte Schwenkarm gegen den Anschlag (23) mit dem Dämpfungselement (24) führbar ist, und wobei der zweite Schwenkarm in Eingriff mit dem Sperrsegment (11) steht.

13. Betätigungsvorrichtung nach einem der Ansprüche 11 oder 12, **dadurch gekennzeichnet, dass** auf der dem Sperrsegment (11) zugewandten Seite der Sperrklinke (10) ein Endanschlag (26) in Form eines Formteiles zur Begrenzung der Bewegung der Sperrklinke (10) vorgesehen ist.

14. Betätigungsvorrichtung nach Anspruch 13, **dadurch gekennzeichnet, dass** der Anschlag (23) und der Endanschlag (26) beidseits der Sperrklinke (10) gegenüberliegend angeordnet sind.

15. Betätigungsvorrichtung nach einem der Ansprüche 13 oder 14; **dadurch gekennzeichnet, dass** der Handbremshebel (2) zwei Hebelschalen (2a) aufweist, wobei an der Innenseite einer Hebelschale (2a) die den Anschlag (23) und den Endanschlag (26) bildenden Formteile angeformt sind.

16. Betätigungsvorrichtung nach einem der Ansprüche 1 - 15, **dadurch gekennzeichnet, dass** an dem hinteren Ende der Betätigungsstange (7) eine Aufnahme (17) vorgesehen ist, in welcher das freie Ende der Sperrklinke (10) mit Spiel geführt ist.

17. Betätigungsvorrichtung nach Anspruch 16, **dadurch gekennzeichnet, dass** die Sperrklinke (10) in einer Raststellung am Sperrsegment (11) durch die Aufnahme (17) fixiert ist, und dass bei Schwenken des Handbremshebels (2) die Sperrklinke (10) entlang des Sperrsegments (11) geführt ist, wobei die Betätigungsstange (7) von der durch den Kontakt mit dem Sperrsegment (11) induzierten Bewegung der Sperrklinke (10) durch die Bewegung der Sperrklinke (10) in der Aufnahme (17) entkoppelt ist.

18. Verwendung der Betätigungsvorrichtung nach einem der vorhergehenden Ansprüche in einem Sitz-Verstellmechanismus, einer Motorhaubenentriegelung, einer Heckklappenentriegelung oder einem Tankdeckelverriegelungssystem eines Kraftfahrzeuges.

19. Betätigungsvorrichtung mit einem an einer Aufnahme fixierten Sperrsegment (11) und einer beweglich gelagerten Sperrklinke (10), welche entlang des Sperrsegments (11) führbar und an diesem einrastbar ist, wobei die Bewegung der Sperrklinke (10) durch einen Anschlag (23) mit einem elastischen Dämpfungselement (24) abgebremst ist, und wobei das Dämpfungselement (24) bei Druckbeaufschlagung durch die Sperrklinke (10) entlang eines vorgegebenen Dämpfungsweges gegen den Anschlag (23) geführt ist, **dadurch gekennzeichnet, dass** die Betätigungsvorrichtung (1) Bestandteil eines Verstellmechanismus eines Sitzes eines Kraftfahrzeugs ist.

20. Betätigungsvorrichtung mit einem an einer Aufnahme fixierten Sperrsegment (11) und einer beweglich gelagerten Sperrklinke (10), welche entlang des Sperrsegments (11) führbar und an diesem einrastbar ist, wobei die Bewegung der Sperrklinke (10) durch einen Anschlag (23) mit einem elastischen Dämpfungselement (24) abgebremst ist, und wobei das Dämpfungselement (24) bei Druckbeaufschlagung durch die Sperrklinke (10) entlang eines vorgegebenen Dämpfungsweges gegen den Anschlag (23) geführt ist, **dadurch gekennzeichnet, dass** die Betätigungsvorrichtung (1) Bestandteil einer Motorhaubenentriegelung eines Kraftfahrzeugs ist.

21. Betätigungsvorrichtung mit einem an einer Aufnahme fixierten Sperrsegment (11) und einer beweglich gelagerten Sperrklinke (10), welche entlang des Sperrsegments (11) führbar und an diesem einrastbar ist, wobei die Bewegung der Sperrklinke (10) durch einen Anschlag (23) mit einem elastischen Dämpfungselement (24) abgebremst ist, und wobei das Dämpfungselement (24) bei Druckbeaufschlagung durch die Sperrklinke (10) entlang eines vorgegebenen Dämpfüngsweges gegen den Anschlag (23) geführt ist, **dadurch gekennzeichnet, dass** die Betätigungsvorrichtung (1) Bestandteil einer Heckklappenentriegelung eines Kraftfahrzeugs ist.

22. Betätigungsvorrichtung mit einem an einer Aufnahme fixierten Sperrsegment (11) und einer beweglich gelagerten Sperrklinke (10), welche entlang des Sperrsegments (11) führbar und an diesem einrastbar ist, wobei die Bewegung der Sperrklinke (10) durch einen Anschlag (23) mit einem elastischen Dämpfungselement (24) abgebremst ist, und wobei das Dämpfungselement (24) bei Druckbeaufschlagung durch die Sperrklinke (10) entlang eines vorgegebenen Dämpfungsweges gegen den Anschlag (23) geführt ist, **dadurch gekennzeichnet, dass** die Betätigungsvorrichtung (1) Bestandteil eines Tankdeckelverriegelungssystems eines Kraftfahrzeugs ist.

## Claims

1. Actuating device for a parking brake with a handbrake lever (2) pivotably mounted at a bearing block (3), with a fixing device (9), which comprises a locking segment (11) fixed to the bearing block (3) and a movably mounted catch (10), and with an actuating rod (7) guided in the handbrake lever (2) and coupled with the catch (10), **characterised in that** an abutment (23) with a resilient damping element (24) is provided at the handbrake lever (2), by means of which on pivotation of the handbrake lever (2) the catch (10) is braked when being guided into detent teeth (12) of the locking segment (11).

2. Actuating device according to claim 1, **characterised in that** a segment of the damping element (24) fixed to the abutment (23) protrudes from an abutment surface of the abutment (23), wherein this segment is pressed against the abutment surface when loaded in pressure by the catch (10).

3. Actuating device according to claim 2, **characterised in that** the damping travel is formed by the spacing of the segment of the damping element (24) from the abutment surface.

4. Actuating device according to claim 3, **characterised in that** the length of the damping travel is matched to the height of the detent teeth (12) provided at the locking segment (11).

5. Actuating device according to one of claims 1 to 4, **characterised in that** the damping element (24) is formed by a hollow-cylindricai hose length.

6. Actuating device according to claim 5, **characterised in that** the damping element (24) consists of silicon.

7. Actuating device according to one of claims 1 to 6, **characterised in that** the abutment (23) is formed by at least one shaped part, which has a receptacle in which a segment of the damping element (24) is mounted.

8. Actuating device according to claim 7, **characterised in that** the segment protruding beyond the abutment surface and the segment, which is mounted in the moulded part, of the damping element (24) are each formed by a part piece, which extends over 180°, of the circumferential surface of the hollow-cylindrical hose length.

9. Actuating device according to one of claims 7 and 8, **characterised in that** the receptacle (17) of the shaped part is formed by a cut-out (24) into which the segment of the damping element (24) is insertable.

10. Actuating device according to claim 9, **characterised in that** the cut-out (25) extends along an arc and opens at the lateral edges of the abutment surface.

11. Actuating device according to one of claims 1 to 10, **characterised in that** the abutment (23) together with the damping element (24) is arranged on the side of the catch (10) remote from the locking segment (11).

12. Actuating device according to claim 11, **characterised in that** the catch (10) is mounted at the handbrake lever (2) to be pivotable about a pivot axis so that the catch (10) is divided into two pivot arms extending on either side of the pivot axis, wherein the first pivot arm, which is coupled to the actuating rod (7), can be guided against the abutment (23) with the damping element (24), and wherein the second pivot arm is disposed in engagement with the locking segment (11).

13. Actuating device according to one of claims 11 and 12, **characterised in that** an end abutment (26) in the form of a shaped part for limitation of the movement of the catch (10) is provided on the side of the catch (10) facing the locking segment (11).

14. Actuating device according to claim 13, **characterised in that** the abutment (23) and the end abutment (26) are arranged oppositely on either side of the catch (10).

15. Actuating device according to one of claims 13 and 14, **characterised in that** the handbrake lever (2) comprises two lever shells (2a), wherein shaped parts forming the abutment (23) and the end abutment (26) are integrally formed at the inner side of one lever shell (2a).

16. Actuating device according to one of claims 1 to 15, **characterised in that** a receptacle (17) in which the free end of the catch (10) is guided with play is provided at the rearward end of the actuating rod (7).

17. Actuating device according to claim 16, **characterised in that** the catch (10) is fixed in a detent setting at the locking segment (11) by the receptacle (17) and that on pivotation of the handbrake lever (2) the catch (10) is guided along the locking segment (11), wherein the actuating rod (7) is decoupled from the movement, which is induced by the contact with the locking segment (11), of the catch (10) by the movement of the catch (10) in the receptacle (17).

18. Use of the actuating device according to one of the preceding claims in a seat adjusting mechanism, a motor bonnet unlocking device, a boot lid unlocking device or a tank cover locking system of a motor vehicle.

19. Actuating device with a locking segment (11), which is fixed to a receptacle, and a movably mounted catch (10), which can be guided along the locking segment (11) and detented at this, wherein the movement of the locking segment (10) is braked by an abutment (23) with a resilient damping element (24) and wherein the damping element (24) on pressure loading by the catch (10) is guided along a predetermined damping path against the abutment (23), **characterised in that** the actuating device (1) is a component of an adjusting mechanism of a seat of a motor vehicle.

20. Actuating device with a locking segment (11), which is fixed to a receptacle, and a movably mounted catch (10), which can be guided along the locking segment (11) and detented at this, wherein the movement of the locking segment (10) is braked by an abutment (23) with a resilient damping element (24) and wherein the damping element (24) on pressure loading by the catch (10) is guided along a predetermined damping path against the abutment (23), **characterised in that** the actuating device (1) is a component of a motor bonnet unlocking device of a motor vehicle.

21. Actuating device with a locking segment (11), which is fixed to a receptacle, and a movably mounted catch (10), which can be guided along the locking segment (11) and detented at this, wherein the movement of the locking segment (10) is braked by an abutment (23) with a resilient damping element (24) and wherein the damping element (24) on pressure loading by the catch (10) is guided along a predetermined damping path against the abutment (23), **characterised in that** the actuating device (1) is a component of a boot lid unlocking device of a motor vehicle.

22. Actuating device with a locking segment (11), which is fixed to a receptacle, and a movably mounted catch (10), which can be guided along the locking segment (11) and detented at this, wherein the movement of the locking segment (10) is braked by an abutment (23) with a resilient damping element (24) and wherein the damping element (24) on pressure loading by the catch (10) is guided along a predetermined damping path against the abutment (23), **characterised in that** the actuating device (1) is a component of a tank cover locking system of a motor vehicle.

## Revendications

1. Dispositif d'actionnement pour un frein d'immobilisation, comprenant un levier de frein à main (2) monté de façon pivotante sur un support (3), un dispositif d'immobilisation (9) qui présente un segment de blocage (11) fixé sur le support (3) et un cliquet d'arrêt (10) monté de façon mobile, comprenant également une barre d'actionnement. (7) guidée dans le levier de frein à main (2) et accouplée au cliquet d'arrêt (10) **caractérisé en ce qu'**une butée (23) dotée d'un élément d'amortissement élastique (24) est prévue sur le levier de frein à main (2), élément d'amortissement au moyen duquet le cliquet d'arrêt (10) est freiné en étant guidé dans des crans (12) du segment de blocage (11) lorsque l'on fait pivoter le levier de frein à main (2).

2. Dispositif d'actionnement selon la revendication 1, **caractérisé en ce qu'**un segment de l'élément d'amortissement (24) fixé à la butée (23) fait saillie d'une surface de butée de la butée (23), ce segment étant appuyé contre la surface de butée lorsque le cliquet d'arrêt (10) y exerce une pression.

3. Dispositif d'actionnement selon la revendication 2, **caractérisé en ce que** la course d'amortissement est formée par l'écart entre le segment de l'élément d'amortissement (24) et la surface de butée.

4. Dispositif d'actionnement selon la revendication 3, **caractérisé en ce que** la longueur de la course d'amortissement est adaptée aux hauteurs des crans (12) prévus sur le segment de blocage (11).

5. Dispositif d'actionnement selon l'une des revendications 1 - 4, **caractérisé en ce que** l'élément d'amortissement (24) est formé par un morceau de tuyau souple cylindrique et creux

6. Dispositif d'actionnement selon la revendication 5, **caractérisé en ce que** l'élément d'amortissement (24) est composé de silicone.

7. Dispositif d'actionnement selon l'une des revendications 1 à 6, **caractérisé en ce que** la butée (23) est formée par au moins une pièce moulée qui présente un logement dans lequel est logé un segment de l'élément d'amortissement (24).

8. Dispositif d'actionnement selon la revendication 7, **caractérisé en ce que** le segment faisant saillie de la surface de butée et le segment de l'élément d'amortissement (24) qui est logé dans la pièce moulée sont chacun formés par une partie de l'enveloppe du morceau de tuyau souple cylindrique et creux qui s'étend sur 180°.

9. Dispositif d'actionnement selon la revendication 7 ou 8, **caractérisé en ce que** le logement de la pièce moulée est formé par un évidement (25) dans lequel le segment de l'élément d'amortissement (24) peut être encastré.

10. Dispositif d'actionnement selon la revendication 9, **caractérisé en ce que** l'évidement (25) s'étend le long d'un arc de cercle et débouche au niveau des bords latéraux de la surface de butée.

11. Dispositif d'actionnement selon l'une des revendications 1 - 10, **caractérisé en ce que** la butée (23) est disposée avec l'élément d'amortissement (24) sur la face du cliquet d'arrêt (10) qui est opposée au segment de-blocage (11).

12. Dispositif d'actionnement selon la revendication 11, **caractérisé en ce que** le cliquet d'arrêt (10) est monté sur le levier de frein à main (2) de manière à pouvoir pivoter autour d'un axe de pivotement, si bien que le cliquet d'arrêt (10) est divisé en deux bras pivotants s'étendant de part et d'autre de l'axe de pivotement, le premier bras pivotant accouplé à la barre d'actionnement (7) pouvant être amené vers la butée (23) munie de l'élément d'amortissement (24) et le second bras pivotant étant en prise avec le segment de blocage (11).

13. Dispositif d'actionnement selon la revendication 11 ou 12, **caractérisé en ce qu'**une butée de fin de course (26) se présentant sous la forme d'une pièce moulée destinée à limiter le mouvement du cliquet d'arrêt (10) est prévue sur la face du cliquet d'arrêt (10) qui est tournée vers le segment de blocage (11).

14. Dispositif d'actionnement selon la revendication 13, **caractérisé en ce que** la butée (23) et la butée de fin de course (26) sont disposées l'une en face de l'autre de part et d'autre du cliquet d'arrêt (10).

15. Dispositif d'actionnement selon la revendication 13 ou 14, **caractérisé en ce que** le levier de frein à main (2) présente deux coques de levier (2a), les pièces moulées formant la butée (23) et la butée de fin de course (26) étant ménagées sur la face intérieure d'une coque de levier (2a).

16. Dispositif d'actionnement selon l'une des revendications 1 - 15, **caractérisé en ce qu'**à l'extrémité arrière de la barre d'actionnement (7) est prévu un logement (17) dans lequel l'extrémité libre du cliquet d'arrêt (10) est guidée avec jeu.

17. Dispositif d'actionnement selon la revendication 16, **caractérisé en ce que** le cliquet d'arrêt (10) est immobilisé dans une position enclenchée sur le segment de blocage (11) par le logement (17), et **en ce que** lorsque le levier de frein à main (2) pivote, le cliquet d'arrêt (10) est guidé le long du segment de blocage (11), la barre d'actionnement (7) étant désaccouplée du mouvement du cliquet d'arrêt (10) induit par le contact avec le segment de blocage (11) par le mouvement dudit cliquet d'arrêt (10) dans le logement (17).

18. Mise en oeuvre du dispositif d'actionnement selon l'une des revendications précédentes dans un mécanisme de réglage pour siège, un système de déverrouillage de capot, un système de déverrouillage de hayon ou d'un système de verrouillage du bouchon du réservoir de carburant d'un véhicule automobile.

19. Dispositif d'actionnement comprenant un segment de blocage (11) fixé sur un support et un cliquet d'arrêt (10) monté de façon mobile qui peut être guidé le long dudit segment de blocage (11) et enclenché dans ce dernier, le mouvement du cliquet d'arrêt (10) étant freiné par une butée (23) dotée d'un élément d'amortissement élastique (24) et l'élément d'amortissement (24) étant amené vers la butée (23) avec une course d'amortissement prédéfinie lorsque le cliquet d'arrêt (10) y exerce une pression, **caractérisé en ce que** le dispositif d'actionnement (1) fait partie intégrante d'un mécanisme de réglage d'un siège de véhicule automobile.

20. Dispositif d'actionnement comprenant un segment de blocage (11) fixé sur un support et un cliquet d'arrêt (10) monté de façon mobile qui peut être guidé le long dudit segment de blocage (11) et enclenché dans ce dernier, le mouvement du cliquet d'arrêt (10) étant freiné par une butée (23) dotée d'un élément d'amortissement élastique (24) et l'élément d'amortissement (24) étant amené vers la butée (23) avec une course d'amortissement prédéfinie lorsque le cliquet d'arrêt (10) y exerce une pression, **caractérisé en ce que** le dispositif d'actionnement (1) fait partie intégrante d'un système de déverrouillage d'un capot de véhicule automobile.

21. Dispositif d'actionnement comprenant un segment de blocage (11) fixé sur un support et un cliquet d'arrêt (10) monté de façon mobile qui peut être guidé le long dudit segment de blocage (11) et enclenché dans ce dernier, le mouvement du cliquet d'arrêt (10) étant freiné par une butée (23) dotée d'un élément d'amortissement élastique (24) et l'élément d'amortissement (24) étant amené vers la butée (23) avec une course d'amortissement prédéfinie lorsque le cliquet d'arrêt (10) y exerce une pression, **caractérisé en ce que** le dispositif d'actionnement (1) fait partie intégrante d'un système de déverrouillage d'un hayon de véhicule automobile.

22. Dispositif d'actionnement comprenant un segment de blocage (11) fixé sur un support et un cliquet d'arrêt (10) monté de façon mobile qui peut être guidé le long dudit segment de blocage (11) et enclenché dans ce dernier, le mouvement du cliquet d'arrêt (10) étant freiné par une butée (23) dotée d'un élément d'amortissement élastique (24) et l'élément d'amortissement (24) étant amené vers la butée (23) avec une course d'amortissement prédéfinie lorsque le cliquet d'arrêt (10) y exerce une pression, **caractérisé en ce que** le dispositif d'actionnement (1) fait partie intégrante d'un système de verrouillage du bouchon du réservoir de carburant d'un véhicule automobile.
